Europäisches Patentamt

European Patent Office

Office européen des brevets

(11) Veröffentlichungsnummer: **0 294 720**
**A2**

(12) **EUROPÄISCHE PATENTANMELDUNG**

(21) Anmeldenummer: **88108897.5**

(51) Int. Cl.⁴: **B62M 25/04**

(22) Anmeldetag: **03.06.88**

(30) Priorität: **11.06.87 DE 3719421**

(43) Veröffentlichungstag der Anmeldung:
**14.12.88 Patentblatt 88/50**

(84) Benannte Vertragsstaaten:
**AT BE CH DE ES FR IT LI NL**

(71) Anmelder: **Unseld, Hans-Peter, Dr.**
**Lerchenweg 9**
**D-8027 Neuried(DE)**

(72) Erfinder: **Unseld, Hans-Peter, Dr.**
**Lerchenweg 9**
**D-8027 Neuried(DE)**

(54) **Kombinierter Brems- und Gangschaltungsdrehgriff.**

(57) Der Einstellvorrichtung liegt die Aufgabe zugrunde, den Schaltvorgang einer Fahrradgangschaltung durch Griffdrehung vorzunehmen ohne die Hand vom Lenker zu nehmen, den nächsten Gang durch einfaches auslösen der Drehung am Griff automatisch einzustellen und den Griff in dieser Einstellung zu fixieren, und auch bei steifen Zug- und Druckdrähten eine genügend große Anzahl von Schaltstufen zu gewährleisten.

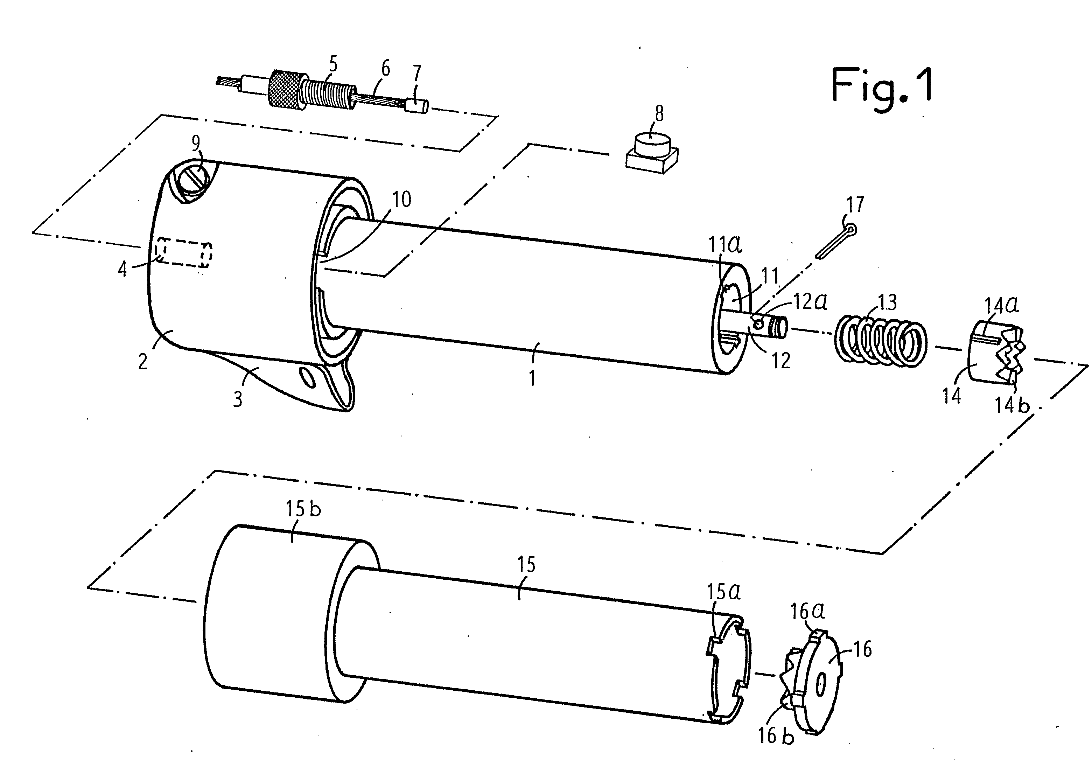

Die Einstellvorrichtung ermöglicht dies zum einen durch im Inneren des Lenkerrohres liegenden Gangeinrastmechanismus (11,12,13,14,16) wie in Figur 1 dargestellt, zum anderen durch ein im wesentlichen aus den Teilen (8,10,15b,18) bestehenden Umlenkgetriebe, über welches der Steuerdraht mit dem Griffrohr (15) verbunden ist.

Fig. 1

## KOMBINIERTER BREMS- UND GANGSCHALTUNGSDREHGRIFF

Die Erfindung betrifft einen an der Lenkstange eines Fahrrades gehaltenen kombinierten Brems- und Gangschaltungsdrehgriff, insbesondere für Naben- und Kettenschaltungen.

Bei Fahrrädern mit Kettenschaltungen ist die Betätigungseinrichtung für die Gangschaltung im allgemeinen am oberen Teil des Rahmens angeordnet. Um bei dieser Anordnung die Schaltung zu betätigen, muß der Fahrer die Lenkstange mit einer Hand loslassen, was eine erhebliche Beeinträchtigung der Fahrsicherheit mit sich bringt. Man kennt seit langem Drehgriffe zur Betätigung von Gangschaltungen, vornehmlich für 2-bis 3-gängige Kleinkrafträder. Diese zeichnen sich unter anderem dadurch aus, daß bei betätigen des Kupplungshebels der Drehgriff entriegelt und dadurch erst eine Drehbewegung des Griffes ermöglicht wird. (Deutsches Patent DT 16 05 793)

Da bei nichtmotorisierten Fahrrädern anstelle des Kupplungshebels sinvollerweise der Bremshebel zu treten hat, wurde schon vorgeschlagen, den Drehgriff durch einen zusätzlichen Hebel zu arretieren.

Dies hat den Nachteil, daß vor und nach dem Schaltvorgang ein Arretierungsmechanismus betätigt werden muß.

Bei nueren Kettenschaltungen mit integriertem Indexmechanismus für die einzelnen Schaltstufen wird das Steuerseil sowohl als Zug- als auch als Druckdraht verwendet. Unerläßlich dafür ist, daß der Steuerdraht von seiner Befestigung am Drehgriff an bis zum Eintritt in die Ummantelung durch eine Metallhülse unverbiegbar gemacht wird. Wird der Drehgriff mit einer Positionierungseinrichtung für die einzelnen Schaltstufen versehen, so muß aus material- und bautechnischen Gründen (insbesondere bei G 85 36 5378) am Drehgriff pro Schaltvorgang eine Drehung von im wesentlichen nicht weniger als 30 Grad vorgenommen werden. Bei einer 5-gängigen Kettenschaltung ergibt sich deshalb eine Drehung des Griffes um mindestens 120 Grad, um von dem 1. Gang in den 5. Gang zu schalten.

Bei den bekannten Schaltgriffen wird nun der Steuerdraht durch Griffdrehug auf eine Trommel aufgewickelt. Für Steuerdrähte mit steifem Ende für Zug- und Druckwirkung ist eine Aufwicklung in oben beschriebenem Maße nicht möglich.

Der Erfindung liegt nun die Aufgabe zugrunde,

1. den Schaltvorgang durch Griffdrehung vorzunehmen, ohne die Hand vom Lenker zu nehmen,

2. den nächsten Gang durch einfaches Auslösen der Drehung am Griff automatisch einzustellen und den Griff in dieser Einstellung zu fixieren, und

3. auch bei steifen Zug- und Druckdrähten eine genügend große Anzahl von Schaltstufen am Drehgriff zu ermöglichen.

Neuerungsgemäß werden diese Probleme dadurch gelöst, daß die Einstellvorrichtung nach Anspruch 1 einen Gangeinrastmechanismus enthält, in welchem durch eine Druckfeder zwei Zahnkränze aneinandergepreßt werden, die bei Drehung des Griffrohres ihre relative Stellung zueinander ändern. Dabei bedeutet die Verdrehung um eine Zahnweite die Schaltung in einen benachbarten Gang.

Ferner wird neuerungsgemäß nach Anspruch 1 der Steuerdraht mit dem Griffrohr über ein Umlenkgetriebe verbunden, in welchem ein Läufer - in den er Steuerdraht eingehängt wird - durch ein im Griffrohr ausgebildetes Flachgewinde angetrieben wird und entlang einer im Grundkörper des Drehgriffes eingelassenen Führungsnut gleitet. Dadurch wird die Drehbewegung des Griffrohres in eine geradlinige Bewegung für den Steuerdraht transformiert.

Die Steigung des Flachgewindes, welche stückweise variieren kann, und welche den Vorschub des Läufers garantiert, ist dabei auf die Anzahl der Zähne der Zahnkränze im Gangeinrastmechanismus abgestimmt, um so die geforderte Auslenkung des Steuerdrahtes pro Schaltstufe zu gewährleisten.

Die nachstehende Beschreibung einer bevorzugten Ausführungsform der Erfindung dient im Zusammenhang mit den beiliegenden Zeichnungen der weiteren Erläuterung.

Es zeigen:

Figur 1 Eine Explosionsdarstellung der Schalteinrichtung mit allen wesentlichen Teilen.

Figur 2 Einen Schnitt durch das Gehäuse (2) des Grundkörpers (1,2,3).

Figur 3 Einen Schnitt durch das Griffrohr (15) (in Seitenansicht) zur Darlegung des Flachgewindes (18) des Umlenkgetriebes

Figur 4 Einen Schnitt durch das hintere Teil (!) des Grundkörpers (1,2,3), zur Darlegung der Hülse (11) des Gangeinrastmechanismus.

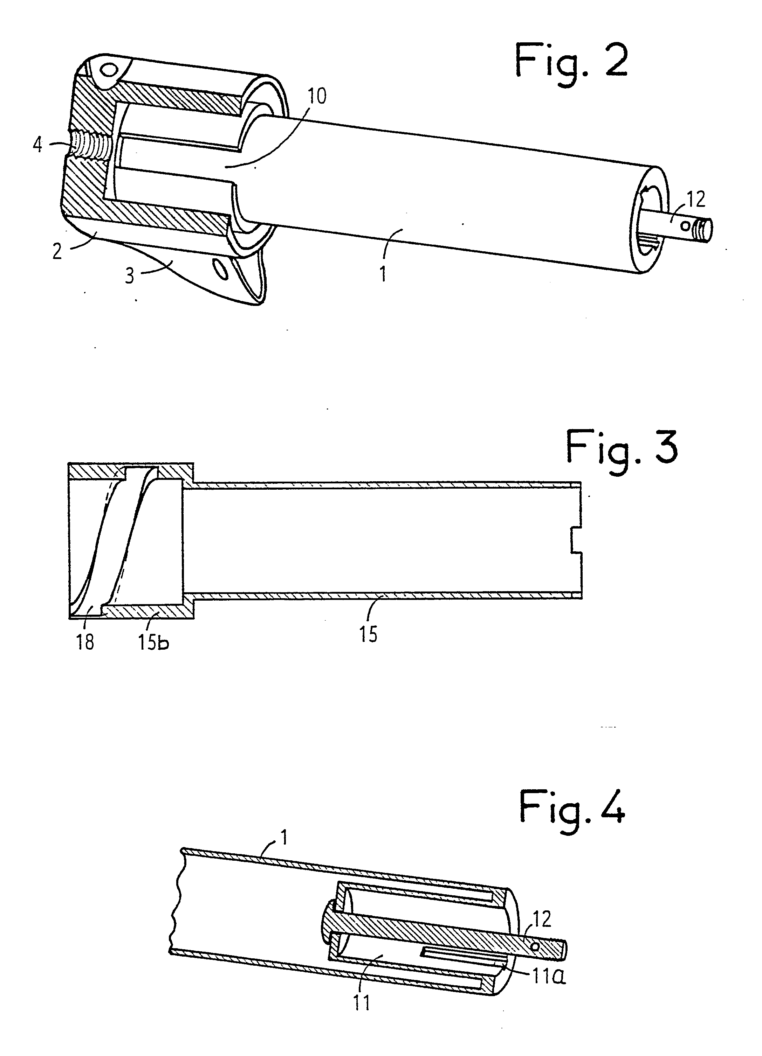

Der Grundkörper (1,2,3) wird nun so auf ein Ende des Lenkerrohres aufgesteckt, daß das Gehäuse (2) zur Lenkermitte zeigt, und daß die Hülse (11), welche den Gangeinrastmechanismus enthält, vollständig innerhalb des Lenkerrohres zu liegen kommt. In Figur 4 erkennt man den Zwischenraum zwischen der Wandung des Rohres (1) und der Hülse (11), der in montiertem Zustand von der Wandung des Lenkerrohres eingenommen wird. Mittels der Befestigungsschraube (9) wird der Grundkörper (1,2,3) auf dem Lenker festgeklemmt.

An dem in Figur 1 zu erkennenden Sockel (3) ist in bekannter Weise ein Bremshebel befestigt, was jedoch nicht zeichnerisch dargestellt wurde. Das Griffrohr (15) ist so auf dem Rohr (1) drehbar gelagert, daß das Teil (15b) vollständig innerhalb des Gehäuses (2) liegt.

Mit Hilfe von Figur 1 und 2 läßt sich nun die Funktion des Umlenkgetriebes leicht erkennen. An der Stirnseite des Gehäuses (2) ist eine Gewindebohrung (4) ausgebildet, in welche die Gewindehülse (5) eingeschraubt wird. Die untere, dem zylindrischen Teil entgegengesetzte Seite des Läufers (8) weist eine Einkerbung auf, in die der Nippel (7) des Steuerdrahtes (6) eingehängt wird. Dieser untere, quaderförmige Teil des Läufers (8) liegt in der Führungsnut (10), welche in Figur 2 zu erkennen ist. Der obere, zylindrische Teil des Läufers (8) liegt in dem Flachgewinde (18), welches im Inneren des vorderen Teils (15b) des Griffrohres (15) ausgebildet ist (Figur 3). Der vordere Teil (15b) des Griffrohres paßt dabei genau über die, innerhalb des Gehäuses (2) liegende Verdickung des Rohres (1). Verdreht man nun das Griffrohr (15), so gleitet der Läufer in der Führungsnut je nach Drehrichtung vor und zurück. Das Flachgewinde (18) wird dabei je nach Bedarf als links- oder rechtsgägig ausgelegt. Der hintere Teilbereich des Rohres (1) beinhaltet eine Hülse (11), die zwei gegenüberliegende Nuten (11a) aufweist (Figur 1 und Figur 4). In diesen beiden Nuten gleiten die beiden Keile (14a) des Zylinders (14), der dadurch am Verdrehen innerhalb der Hülse gehindert wird. Die Druckfeder (13) preßt nun den Zahnkranz (14b) des Zylinders gegen den Zahnkranz (16b) der Mitnehmerscheibe (16), die durch einen Splint (17), welcher in der Bohrung (12a) des Stehbolzens (12) steckt, gesichert ist. Dabei greifen die 4 Keile (16a) der Mitnehmerscheibe in die 4 Nuten (15a) des Griffrohres ein.

Wird nun das Griffrohr gedreht, so wird diese Drehbewegung durch die Mitnehmerscheibe übertragen und drückt über die Zahnkränze den Zylinder entgegen der Federkraft in Richtung Lenkermitte. Sobald das Griffrohr genügend weit gedreht wird, schnappt der Zylinder wieder nach außen, so daß die Zähne des Zylinders und der Mitnehmerscheibe wieder in einer um einen Zahn verdrehten Position ineinandergreifen.

Dadurch wird gleichzeitig der neue Gang eingestellt und das Griffrohr in seiner neuen Position fixiert. Die Anzahl der Zähne und die Steigung des Flachgewindes sind so aufeinander abgestimmt, daß sich pro Schaltstufe die gewünschte Auslenkung des Steuerdrahtes ergibt. Durch eine genügend harte Druckfeder (13), die unter Vorspannung in der Hülse (11) sitzt, läßt sich das Griffrohr nur durch eine deutlich spürbare Kraftanwendung verdrehen, so daß eine unbeabsichtigte Schaltung ausgeschlossen wird.

Zur Kennzeichnung der einzelnen Schaltpositionen ist im Gehäuse (2) ein Fenster eingelassen (in der Zeichnung nicht dargestellt). Auf dem vorderen Teil (15b) des Griffrohres sind dabei entsprechende Zahlen aufgedruckt, die bei der jeweiligen Griffstellung in dem Schaufenster erscheinen.

Bis auf den Bremshebel, die Druckfeder, den Stehbolzen und den Splint können sämtliche Teile aus Kunststoff hergestellt werden, was eine einfache und kostengünstige Herstellung ermöglicht. Ferner wird dadurch die ganze Einstellvorrichtung gewichtsmäßig sehr leicht. Da der Gangeinrastmechanismus innerhalb des Lenkerrohres sitzt, ist zudem eine sehr schlanke und gefällige Bauweise der gesamten Vorrichtung möglich.

## Ansprüche

1. Ein an der Lenkstange eines Fahrrades gehaltener kombinierter Brems- und Gangschaltungsdrehgriff, insbesondere für Naben- und Kettenschaltungen, dadurch gekennzeichnet, daß

a) auf einem Grundkörper ein Griffrohr drehbar angeordnet ist,

b) der Steuerdraht mit dem Griffrohr über ein Umlenkgetriebe verbunden ist, welches aus einer Führungsnut, einem Läufer und einem Flachgewinde besteht, und

c) sich im Inneren des Grundkörpers ein Gangeinrastmechanismus befindet, in welchem durch eine Druckfeder zwei Zahnkränze aneinandergepreßt werden, die bei Drehung des Griffrohres ihre relative Stellung zueinander ändern.

2. Kombinierter Brems- und Gangschaltungsdrehgriff nach Anspruch 1, dadurch gekennzeichnet, daß sich im Inneren des vorderen, zur Lenkermitte gerichteten Teils des Griffrohres, ein Flachgewinde befindet, in dem ein Teil des Läufers beweglich gelagert ist, wobei die Steigung des Flachgewindes je nach der geforderten Auslenkung des Steuerdrahtes zwischen den einzelnen Schaltstufen konstant bleibt oder stückweise variiert.

3. Kombinierter Brems- und Gangschaltungsdrehgriff nach Anspruch 1 und 2, dadurch gekennzichnet, daß der Läufer auf einer Seite eine Einkerbung aufweist, in die der Nippel des Steuerdrahtes eingehängt wird.

4. Kombinierter Brems- und Gangschaltungsdrehgriff nach den Ansprüchen 1 bis 3, dadurch gekennzeichnet, daß ein Teil des Läufers beweglich in einer Führungsnut sitzt, welche am Grundkörper im Inneren des Gehäuses ausgebildet ist.

5. Kombinierter Brems- und Gangschaltungsdrehgriff nach Anspruch 1, dadurch gekennzeichnet, daß sich im Inneren des Grundkörpers eine fest mit diesem verbundene Hülse befindet, in welcher ein Zylinder durch zwei an seiner Längsseite ausgebildete Keile, welche in zwei in der Hülse ausgebildeten Nuten laufen, drehfrei gelagert ist.

6. Kombinierter Brems- und Gangschaltungsdrehgriff nach den Ansprüchen 1 und 5, dadurch gekennzeichnet, daß eine Mitnehmerscheibe zur Weiterleitung der Drehbewegung des Griffrohres durch "Nut und Feder" mit dem Griffrohr verbunden ist, und an einer Stirnseite der Mitnehmerscheibe ein Zahnkranz ausgebildet ist, welcher in einen entsprechenden Zahnkranz eingreift, der an einer Stirnseite des Zylinders ausgebildet ist.

7. Kombinierter Brems- und Gangschaltungsdrehgriff nach den Ansprüchen 1, 5 und 6, dadurch gekennzeichnet, daß eine Druckfeder, welche im Inneren der Hülse liegt, die gezahnte Seite des Zylinders gegen die gezahnte Seite der Mitnehmerscheibe drückt.

8. Kombinierter Brems- und Gangschaltungsdrehgriff nach den Ansprüchen 1, 5, 6 und 7, dadurch gekennzeichnet, daß ein Stehbolzen, der in Axialrichtung der Hülse verläuft und an der geschlossenen Stirnseite dieser Hülse befestigt ist, aus dem Grundkörper herausragt und mit einer Bohrung versehen ist, in welcher ein Splint ruht und die Mitnehmerscheibe entgegen der Federkraft an ihrer Position hält.

9. Kombinierter Brems- und Gangschaltungsdrehgriff nach den Ansprüchen 1 bis 8, dadurch gekennzeichnet, daß in den Grundkörper ein Sockel integriert ist, an dem der Bremshebel befestigt ist.

10. Kombinierter Brems- und Gangschaltungsdrehgriff nach Anspruch 1, dadurch gekennzeichnet, daß der Gangeinrastmechanismus im Inneren des Lenkerrohres untergebracht ist.

Fig.1

5  6  7

8

9

10

4

2

3

11a
11
17
12a
12
13
14a
14
14b

1

EP 0 294 720 A2

15 b

15

15a
16a
16
16 b

Fig. 2

Fig. 3

Fig. 4